Europäisches Patentamt

European Patent Office

Office européen des brevets

(11) Publication number: **0 484 552 A1**

# EUROPEAN PATENT APPLICATION
## published in accordance with Art. 158(3) EPC

(21) Application number: 91909699.0

(22) Date of filing: 28.05.91

(86) International application number:
PCT/JP91/00718

(87) International publication number:
WO 91/19270 (12.12.91 91/28)

(51) Int. Cl.5: **G06K 7/00**

(30) Priority: 28.05.90 JP 138131/90

(43) Date of publication of application:
13.05.92 Bulletin 92/20

(84) Designated Contracting States:
AT BE CH DE DK ES FR GB GR IT LI LU NL SE

(71) Applicant: KABUSHIKI KAISHA SEIDENKO
65-18, Ikebukuro 2-chome
Toshima-ku, Tokyo 171(JP)

(72) Inventor: WATANABE, Yasuo
101, Shizukaso 5-21-4, Kamiikedai Ota-ku
Tokyo 145(JP)

(74) Representative: Dr. Elisabeth Jung Dr. Jürgen
Schirdewahn Dipl.-Ing. Claus Gernhardt
P.O. Box 40 14 68 Clemensstrasse 30
W-8000 München 40(DE)

(54) BAR CODE DISPLAY/READ METHOD AND APPARATUS THEREFOR.

(57) A bar code (6) is displayed on a display device (1) equipped with a bar code display (5), and the displayed bar code (6) is read by a bar code scanner (2). The bar code displayed on the display device can be suitably changed by changing bar code input signals.

FIG. 1

## TECHNICAL FIELD

The present invention relates to a bar code display and read method, and an apparatus for such, and in particular, relates to a bar code display and read method using a display apparatus which can display the bar code correspond to input signals.

## BACKGROUND ART

Bar codes are codes that are combinations of bars, and have the many effects of allowing the coding of mass produced products, grouping along the distribution path, registration to the register at the retail outlet, determination of sales trends, and judging prices, product types and quantities.

These bar codes are classified by the thickness of the bars and their order, and in Japan, are rated by the JIS standards known as JAN. In addition, ratings are also determined for other countries. Accordingly, in Japan and other countries, they function as a shared code, and can be used in the same manner as numerals and the alphabet, but differ from numerals and the alphabet in that there is a means for their reading and so there is the advantage that there is no fear of erroneous reading.

Conventionally, a method has been used where bar codes have been directly printed onto the wrapping of products, or labels to which bar codes have been printed have been affixed to products, and these bar codes read by a bar code scanner.

With this conventional method, it is necessary to display the bar code on the product and so the product must be one with a surface on which a bar code can be printed, or one to which a label having a bar code can be affixed, and there is the problem that there are products that cannot be managed by bar codes.

In addition, in the case of fresh produce or other products for which the price varies by the quantity, a weighing-scales printer issues a bar code seal for that weight and this must be affixed to each product in a method that is not simple, and in which the fear of erroneous affixation or peeling off still remains.

In addition, in cases such as special sales where the price of a product changes according to the day and the time, a bar code list must be prepared and this list used to read using a bar code scanner in a method that is also not simple.

In the light of these problems, the present invention has as an object the provision of a bar code display and read method and an apparatus for such, that enables bar code management for all types of products, that can easily respond to products for which the price changes according to the weight or the time, and that can expand the range of products for which bar codes can be applied.

## DISCLOSURE OF INVENTION

In the bar code display and read system relating to the present invention, a bar code is displayed on a display apparatus and this bar code is read by a bar code scanner in the same manner as a printed bar code.

A bar code display and read apparatus relating to the present invention is configured from being respectively provided with a display apparatus that displays bar codes corresponding to input signals, and a bar code scanner that reads the bar codes displayed on the display apparatus.

## BRIEF DESCRIPTION OF THE DRAWINGS

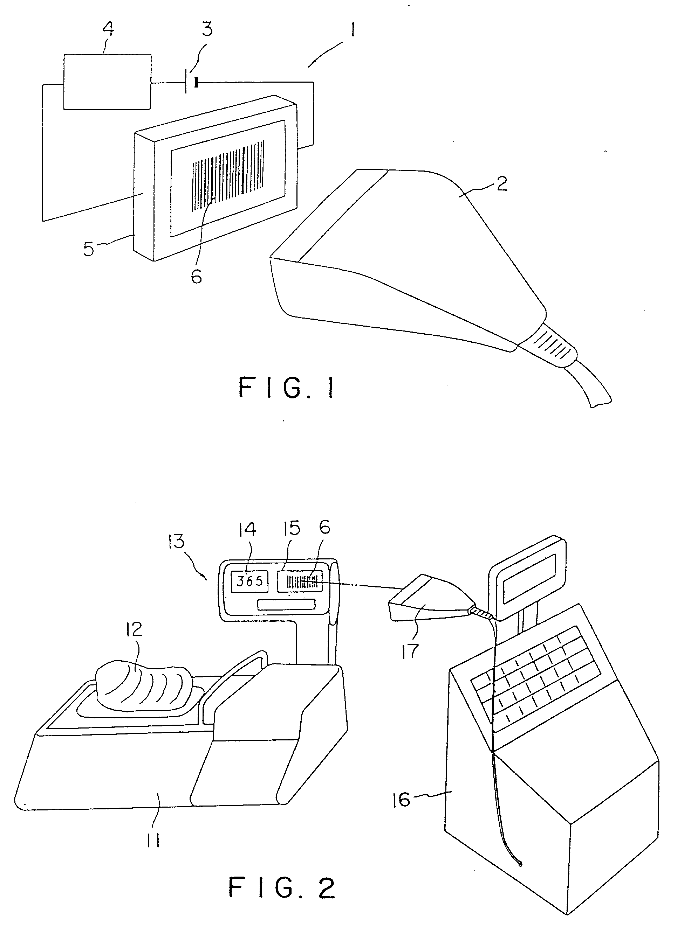

FIG. 1 is a view showing the conceptual configuration of a basic bar code display and read apparatus relating to the present invention, and FIGS. 2 through 4 are views that respectively indicate specific examples of the application of the bar code display and read apparatus relating to the present invention.

## Best Mode for Carrying Out the Invention

FIG. 1 is a view showing the conceptual configuration of a basic bar code display and read apparatus relating to the present invention. This bar code display and read apparatus are configured from a display apparatus 1 and a bar code scanner 2.

As shown in FIG. 1, the display apparatus 1 is provided with a bar code generator 4 that outputs bar code signals by the supply of power from a power source 3, and a bar code display 5 that inputs the bar code signals from the bar code generator 4 as input signals. The bar code 6 corresponding to the input signals is displayed on the bar code display 5. In addition a control apparatus (not shown in the figure) is built into the bar code generator 4 so that the bar code signals can be arbitrarily changed by the control apparatus.

As shown in FIG. 1, a bar code scanner 2 is configured from a hand-held scanner for example, and by placing this bar code scanner 2 in the vicinity of the bar code display 5, it is possible to read the bar code 6 that is displayed on the bar code display 5.

In this manner, the bar code display 5 of the display apparatus 1 displays the bar code 6 that corresponds to the input signals from the bar code generator 4 and so it is possible to have the display on the one screen of different bar codes corresponding to input signals that have been changed by the control apparatus.

FIGS. 2 through 4 are views that respectively indicate specific examples of the application of the bar code display and read apparatus relating to the present invention. The following is a description with reference to these figures.

FIG. 2 shows a bar code display and read apparatus that is used for fresh produce for which the price varies according to the weight and so in the figure 11 is a set of weighing scales that measures the weight of the fresh produce 12. The weight signals for the fresh produce 12 weighed by the weighing scales 11 are sent to the display apparatus 13 as input signals, and numerical display is made on the display 14 and a corresponding bar code is displayed on the bar code display 15 . The bar code 6 that is displayed on the bar code display 15 is read by a bar code scanner 17 which is part of a POS register 16, and is input to the POS register 16.

In this manner, the bar code that corresponds to the weight of the fresh produce 12 is displayed on the bar code display 15 and so it is not necessary to print a bar code label by a weighting-scales printer and to affix it to the product, thereby facilitating the work and lowering the cost.

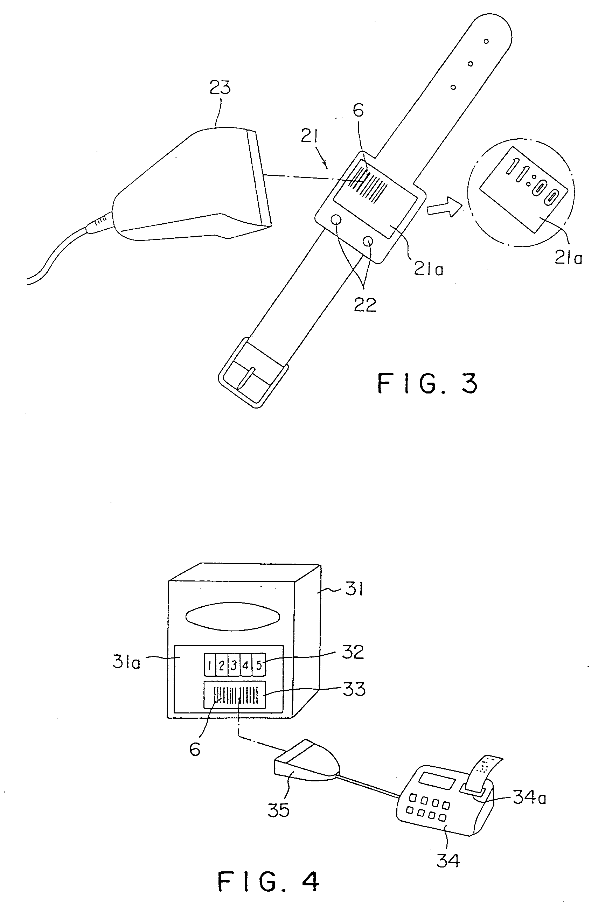

FIG. 3 shows a bar code display and read apparatus that is used for user ID management and so in the figure, the numeral 21 is a bar code display that has the structure of a wristwatch. The display surface 21a of this bar code display 21 normally displays the time but the bar code 6 that is determined beforehand is displayed when the switching button 22 is pressed to change the mode. This bar code 6 is then read by a bar code scanner 23 to enable ID management.

In this manner, through the use of the bar code 6 for ID management, it is possible to use a relatively inexpensive configuration to perform ID management when compared to when fingerprints or the like are used.

In addition, if the bar code display 21 can selectively display a plural number of types of bar code 6, then one application of this could be to store data corresponding to the exposure values, shutter speed, aperture value in accordance with a scene to be photographed by a camera and for this necessary data to be displayed by a bar code and read by a scanner connected to a camera body and stored in the internal memory of a camera. By this, it would be possible to a favorable photograph to be always taken in accordance with the intentions of the operator. If this embodiment is applied, then there would be no necessity for printed bar code tables for photography to be carried around.

FIG. 4 shows a bar code display apparatus that is used for the measuring of gas, water, or electricity amounts and so in the figure, the numeral 31 represents a gas, water, or electricity meter. To the display portion 31a of the meter 31 are respectively provided a numerical display 32 and a bar code display portion 33 that displays a corresponding bar code 6.

As shown in FIG. 4, the bar code 6 that is displayed on the bar code display portion 33 is read by a bar code scanner 35 of a hand-held computer 34 that is carried by the meter reader, and the read data is output to the printer 34a of the hand-held computer 34.

By such a configuration, the meter-reading work that is conventionally performed by the meter reader visually reading the meter is performed accurately and quickly, and the data storage is also facilitated. In addition, the data that is printed out by the printer 34a can be left for confirmation by the customer.

Each of the bar code displays 5,15,21,33 that display the bar code 6 require that the displayed bar code 6 be read accurately by the bar code scanners 2,17,23,35.

The bar code JAN symbol is divided into single (width) units that as a whole are known as a module, and the width of one module is determine as 0.33mm, and a character that configures one alphabetic character is 7 modules, requiring a width of 2.31mm.

Accordingly, the bar code displays 5,15,21,33 are required to display a minimum width of 0.33mm, and from this aspect, liquid crystal displays (LCD) or phosphorescent display tube apparatus (VFD) are suitable.

For example, in the case of an LCD display, the color due to the STN panel of one layer of an STN type of black and white display can be erased by a second layer STN panel and black and white display made but the dot pitch is approximately 0.3mm and the angle of vision is 30° to the left and right and so the contrast ratio is high at 1000:1. Accordingly, there is a sufficient performance for it to function as a bar code display.

Moreover, the size of the bar code of the standard type can be freely enlarged or reduced within a range of 0.8 to 2.0 times. Accordingly, when there are the JIS ratings, the smallest width is 2.14cm and the largest width is 7.46cm. From this, the display apparatus is not limited to liquid crystal displays (LCD) or phosphorescent display tube apparatus (VFD) and can be for example, a CRT, a plasma display (PDP), an electroluminescence (EL) display or a light emitting diode (LED).

Industrial Applicability

As has been described above, the present invention does not print bar codes, but displays bar codes corresponding to input signals and therefore can be used for the bar code management of all types of products. In addition, it is possible to easily correspond to products for which the price varies by the weight or time of sale, and thus expand the range of application of bar codes.

## Claims

1. A bar code display and read method, comprising; displaying a bar code on a display apparatus corresponding to input signals, and
   reading said bar code displayed on said display apparatus by using a bar code scanner.

2. The bar code display and read method of claim 1, wherein;
   said input signals are changed and displayed as a bar code on a display apparatus.

3. A bar code display and read apparatus, comprising;
   a display apparatus to display bar codes corresponding to input signals, and
   a bar code scanner which reads the bar codes displayed on said display apparatus.

4. The bar code display and read apparatus of claim 3, wherein;
   said input signals can be arbitrarily changed.

5. The bar code display and read apparatus of claim 3, wherein;
   said display apparatus is a liquid crystal display.

6. The bar code display and read apparatus of claim 3, wherein;
   said display apparatus is a phosphorescent display tube apparatus (VFD).

7. The bar code display and read apparatus of claim 3, wherein;
   said display apparatus is provided with a weighing-scales and display apparatus.

8. The bar code display and read apparatus of claim 3, wherein;
   said display apparatus is provided with a meter means.

F I G. 1

F I G. 2

FIG. 3

FIG. 4

## INTERNATIONAL SEARCH REPORT

International Application No PCT/JP91/00718

| I. CLASSIFICATION OF SUBJECT MATTER (if several classification symbols apply, indicate all) 6 |
|---|

According to International Patent Classification (IPC) or to both National Classification and IPC

Int. Cl$^5$  G06K7/00

**II. FIELDS SEARCHED**

| Minimum Documentation Searched 7 | |
|---|---|
| Classification System | Classification Symbols |
| IPC | G06K7/00-7/10, 17/00, 19/00 |

| Documentation Searched other than Minimum Documentation<br>to the Extent that such Documents are Included in the Fields Searched 8 |
|---|

| Jitsuyo Shinan Koho | 1971 - 1990 |
|---|---|
| Kokai Jitsuyo Shinan Koho | 1971 - 1990 |

**III. DOCUMENTS CONSIDERED TO BE RELEVANT 9**

| Category * | Citation of Document, 11 with indication, where appropriate, of the relevant passages 12 | Relevant to Claim No. 13 |
|---|---|---|
| X | JP, A, 64-41980 (Koyo Denshi Kogyo K.K.),<br>February 14, 1989 (14. 02. 89),<br>Line 14, upper part, left column, page 2 to<br>line 6, upper part, right column, page 3<br>(Family: none) | 1-8 |
| X | JP, U, 2-30992 (NEC IC Micon System K.K.),<br>February 27, 1990 (27. 02. 90),<br>Claim and Fig. 1 | 1-8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 11, 1991 (11. 06. 91) | July 1, 1991 (01. 07. 91) |
| International Searching Authority | Signature of Authorized Officer |
| Japanese Patent Office | |

Form PCT/ISA/210 (second sheet) (January 1985)